# EUROPEAN PATENT APPLICATION

(11) **EP 3 461 575 A1**
(43) Date of publication of application: **03.04.2019**
(21) Application number: 18197081.5
(22) Date of filing: 27.09.2018
(51) Int. Cl.: B22F 3/105, B29C 64/153, B33Y 10/00, B33Y 50/02, B29C 64/393

(54) **ADDITIVE MANUFACTURING APPARATUS AND METHODS**

(30) Priority: 29.09.2017 IN 201711034716; 13.11.2017 EP 17201234; 05.03.2018 GB 201803510
(71) Applicant: Renishaw PLC, Wotton-under-Edge, Gloucestershire GL12 8JR (GB)
(72) Inventor: BROWN, Ceri, 77447 Champs sur Marne La Vallee cedex 2 (FR); REVANUR, Ramkumar, Stone, Staffordshire ST15 0SH (GB); SUTCLIFFE, Christopher, John, Stone, Staffordshire ST15 0SH (GB)
(74) Representative: Matthews, Paul

(57) **Abstract**

This invention concerns an additive manufacturing method comprising forming layers of unconsolidated material to form a material bed (104) and exposing the layers (201a to 201e) to at least one energy beam to consolidate material to form an object (103). A plurality of regions of a layer (201a to 201e) are consolidated to form together a consolidated section within the layer (201a to 201e) and unconsolidated material of each region is consolidated together with unconsolidated material of at least one other layer (201a to 201e) with different ones of the regions being consolidated together with different other layers (201a to 201e).

## Description

### Field of Invention

This invention concerns additive manufacturing apparatus and methods in which layers of material are solidified in a layer-by-layer manner to form an object. The invention has particular, but not exclusive, application to additive manufacturing apparatus comprising a powder or resin bed. For example, the invention may be used in a powder bed fusion apparatus, such as a selective laser melting (SLM) or selective laser sintering (SLS) apparatus.

### Background

Selective laser melting (SLM) and selective laser sintering (SLS) apparatus produce objects through layer-by-layer solidification of a material, such as a metal powder material, using a high-energy beam, such as a laser beam. A powder layer is formed across a powder bed in a build chamber by depositing a heap of powder adjacent to the powder bed and spreading the heap of powder with a wiper across (from one side to another side of) the powder bed to form the layer. A laser beam is then scanned across areas of the powder layer that correspond to a cross-section of the object being constructed. The laser beam melts or sinters the powder to form a solidified layer. After selective solidification of a layer, the powder bed is lowered by a thickness of the newly solidified layer and a further layer of powder is spread over the surface and solidified, as required. An example of such a device is disclosed in US6042774.

Typically, the laser beam is scanned across the powder along a scan path. An arrangement of the scan paths will be defined by a scan strategy. US5155324 describes a scan strategy comprising scanning an outline (border/shell) of a part cross-section followed by scanning an interior (core) of the part cross-section. Scanning a border of the part may improve the resolution, definition and smoothing of surfaces of the part.

US5932059 discloses to first solidify a number N of layers of the shell region. The material in the core region first remains liquid or powdery having a layer thickness corresponding to N-times the layer thickness of the shell region. After the Nth layer of the shell region is solidified, this N-times thick layer of the core region is also solidified by a correspondingly intensive radiation. Thereby, the time needed to produce the core and therefore, to produce the object can be reduced

US2015/0202826 A1 discloses, for applying a powder layer of a thickness **h**, the support first is lowered by a first height **h1**, which is less than the desired layer thickness h. Using the applicator, a first layer of the powdery constituent material is now applied. Without performing an exposure of the first partial powder layer or a partial area of this layer by the laser, the support is now lowered by a second height **h2**, which is smaller than the desired thickness **h**, and which achieves, together with the first height **h1,** the desired thickness **h**. Using the applicator, a second layer of the powdery constituent material is now applied. Before exposure by the laser, the newly applied powder in the two partial powder layers is brought to the process temperature required. WO2016/169783 A1 and WO2017/008911 A1 describe similar methods.

US2005/0142024 discloses a method of producing three-dimensional sintered workpieces in which a sinter material is applied in layers from a reservoir and heated by irradiation of prescribed individual sections such that the components of the sinter material are combined to give the workpiece by partial or complete fusion in regions. The serially irradiated individual sections have a separation from each other greater than or at least equal to an average diameter of the individual sections.

WO2016/079496 A2 discloses advancing a laser beam or multiple laser beams a plurality of times along a scan path. On each pass along the scan path, the or each one of the laser beams solidifies spaced apart sections of the scan path, each subsequent pass solidifying sections that are located between sections solidified on a previous pass. Alternatively, more complex scanning strategies could be used, wherein each laser beam is advanced along a different scan path.

A problem with such scanning strategies is that, when the laser melts the powder, a melt pool is created that is deeper than it is wide and gathers powder from the surrounding area due to fluid forces. Accordingly, a significant portion of the layer(s) below the one currently being formed is re-melted, suggesting that the process is not energy efficient, and the gathering of powder into the melt pool can result in undesirable voids between adjacent scan paths/points. For processes that join large regions, the shrinkage of the large region as it cools can result in significant residual stresses, which can result in warping of the part being built.

WO2016/156020 discloses a method for forming at least one three-dimensional article through successive fusion of parts of a powder bed. A cylindrical cross section is divided into a first group of inner areas and a second group of inner areas. A contour is provided around the outer surface of the cylinder which is to be manufactured. In a first layer N, the first group of inner areas and the contour are joined leaving the second inner areas unjoined. In a second layer N+1, the second group of inner areas and the contour are joined leaving the first inner areas unjoined. When the second group of inner areas are joined in the second layer N+1, the second group of inner areas of the first layer N are joined simultaneously. This means that the first layer N is fully joined when the joining of the second layer N+1 has been completed.

### Summary of Invention

According to a first aspect of the invention there is provided an additive manufacturing method comprising forming layers of unconsolidated material to form a material bed and exposing the layers to at least one energy beam to consolidate material to form an object. A plurality of regions of a layer are consolidated to form together a consolidated section within the layer. Unconsolidated material of each region is consolidated together with unconsolidated material of at least one other layer. Different ones of the regions may be consolidated together with different other layers.

In this way, different regions in the layer may be consolidated after the formation of different layers allowing the consolidated material to cool before being joined to other regions to form the consolidated section within the layer. This may reduce or even eliminate significant residual stresses due to shrinkage of the consolidated material. Furthermore, voids created by the gathering of unconsolidated material during consolidation of material may be filled before the consolidation of further regions within a layer. Accordingly, the method may both mitigate warping of the object and the presence of pores within the object. In addition, a mass of consolidated material formed when forming each region extends across different sets of layers for different regions potentially reducing lines of weakness caused by the prior art method of consolidating all (or a majority) of regions of a layer immediately after forming the layer.

First ones of the regions may be consolidated through direct exposure of the layer to the at least one energy beam whilst other ones of the regions may be consolidated through direct exposure of one or more subsequently formed layers to the at least one energy beam. In this way, gaps in material in the layer formed by gathering of material during formation of the first ones of the regions are filled by the formation of the subsequently formed layers before the other ones of the regions are consolidated. Accordingly, pores in the object may be reduced.

The first ones of the regions may be consolidated to form discrete regions having unconsolidated material of the layer therebetween before consolidation of the other ones of the regions join the first ones of the regions in the layer. In this way, each discrete region can individually shrink during cooling, reducing residual stresses in the object.

The method may comprise advancing a spot of the at least one energy beam over the layers along parallel tracks with the at least one energy beam being modulated to consolidate separated regions of material along the tracks. Modulation of the energy beam may comprise switching the energy beam on and off. The spot may be advanced along tracks over at least three successive layers, the tracks for each of the three successive layers extending in different directions. The tracks for each of the three successive layers may be straight tracks and may extend at an angle of 60 degrees relative to the tracks of the other successive layers. The at least one energy beam may be modulated as the at least one energy beam is advanced along each track to consolidate unconsolidated regions of a previous layer between already consolidated regions of the previous layer. As the at least one energy beam is moved along each track the at least one energy beam may be modulated to consolidate regions of unconsolidated material extending across at least three layers.

The method may comprise consolidating the regions of the layer by exposing the layer to the energy beam using a first set of exposure points and consolidating regions of a further layer by exposing the further layer to the energy beam using a second set of exposure points, wherein the second set of exposure points comprise substantially the same pattern as, but off-set from, the first set of exposure points. The second set of exposure points may be off-set in a direction non-parallel to a direction of the or each track along which a spot of the energy beam is advanced to expose the exposure points. The tracks used to consolidate the regions of the layer using the first set of exposure points may comprise parallel tracks as described above. The second set of exposure points may be offset in a direction different to the directions of the parallel tracks used in exposing the first set of exposure points. The second set of exposure points maybe off-set in a direction perpendicular to one set of the parallel tracks used in exposing the first set of exposure points. The pattern may be a hexagonal lattice.

The regions may be consolidated to form part of a core of the object. The method may comprise forming a border by consolidating material surrounding the regions, for example, as would be typically carried out in a hull and core scanning strategy.

Alternatively, a perimeter of the object within a layer may be formed, at least in part, by regions of the layer that are consolidated together with unconsolidated material of at least one other layer. The method may comprise carrying out a border scan comprising consolidating unconsolidated material at the perimeter between the ("multi-layer") regions at the perimeter. This results in a so called "blended border" formed through a mix of multi-layer regions and border scan exposure points, which will typically only consolidate unconsolidated material of a single layer thickness.

Different ones of the regions may be consolidated together with a different number of the other layers. This may be achieved by altering a power of the at least one energy beam. Alternatively, all regions consolidated together with other layers may be consolidated together with the same number of other layers. In this way, the same energy beam power may be used for all the regions, which may reduce delays resulting from changes in the energy beam power. The method may comprise exposing each layer to a plurality of energy beams to consolidate material to form the object, a first one of the energy beams operating at a first power density to consolidate regions of unconsolidated material extending across a first number of layers and a second one of the energy beams operating at a second power density to consolidate regions of unconsolidated material extending across a second number of layers different to the first number.

According to a second aspect of the invention there is provided an additive manufacturing apparatus comprising a support for supporting a material bed, a layer formation device for forming a plurality of layers of material on the support to form a material bed, a scanner for steering at least one energy beam over the layers and a processor for controlling the scanner, the processor arranged to control the scanner to carry out the method of the first aspect of the invention.

According to a third aspect of the invention there is provided a data carrier having instructions thereon, which, when executed by a processor of an additive manufacturing apparatus according to the second aspect of the invention, causes the processor to control the additive manufacturing apparatus to carry out the method of the first aspect of the invention.

According to a fourth aspect of the invention there is provided a method of planning an additive manufacturing build in which successive layers of material are formed to form a material bed and the layers exposed to at least one energy beam to consolidate material to form an object, the method comprising receiving a three-dimensional model of an object to be built, determining cross-sections of the object corresponding to the layers of material of the material bed, determining, for at least one of the layers based upon the cross-sections, regions of the layer to be consolidated to form together a consolidated section within the layer, wherein unconsolidated material of each region is consolidated together with unconsolidated material of at least one other layer and different ones of the regions are selected to be consolidated together with different other layers, and generating instructions to be executed by an additive manufacturing apparatus based upon the determination.

The method may comprise generating a build file on a data carrier, the build file comprising the instructions.

According to a fifth aspect of the invention there is provided a system comprising memory for storing therein the three-dimensional model and a processor arranged to carry out the method of the fourth aspect of the invention.

According to a sixth aspect of the invention there is provided a data carrier having instructions thereon, which, when executed by a processor causes the processor to carry out the method of the fifth aspect of the invention.

According to a seventh aspect of the invention there is provided an additive manufacturing method in which an object is formed by selectively consolidating material of a material bed with at least one energy beam, the method comprising forming a first layer of the material bed and exposing the first layer to the at least one energy beam to consolidate unconsolidated material of the first layer and at least one preceding layer throughout the layer thickness of each of the first and the preceding layers to form discrete first consolidated regions in the first layer, the first regions having unconsolidated material of the first layer therebetween, forming one or more further layers of the material bed over the first layer and exposing the or each of the further layers to the at least one energy beam to consolidate unconsolidated material throughout the layer thickness of each of the first and the further layers such that unconsolidated material of the first layer is consolidated to join the first regions.

According to an eighth aspect of the invention there is provided an additive manufacturing method comprising forming layers of unconsolidated material to form a material bed and exposing the layers to at least one energy beam to consolidate material to form an object. Each layer may be consolidated to form a consolidated section within the layer by modulating the energy beam to expose exposure points on the layer, wherein the exposure points are distributed in a hexagonal lattice.

The method may comprise advancing a spot of the energy beam along parallel tracks (hatches) across each layer, wherein the tracks of three layers extend in different directions at an angle of 60 degrees relative to each other.

According to a ninth aspect of invention there is provided an additive manufacturing method comprising forming layers of unconsolidated material to form a material bed and exposing the layers to at least one energy beam to consolidate material to form an object. Each layer may be consolidated to form a consolidated section within the layer by modulating the energy beam to expose a regular pattern of exposure points on the layer. The method may further comprise carrying out a border scan in which border exposure points are exposed around a perimeter of the consolidated section, wherein the perimeter is formed of border exposure points interspersed with exposure points of the regular pattern.

According to a tenth aspect of the invention there is provided an additive manufacturing apparatus comprising a support for supporting a material bed, a layer formation device for forming layers of material of the powder bed, a scanner for scanning at least one energy beam over the layers and a processor for controlling the scanner. The processor may be arranged to control the scanner to carry out the method of the seventh, eighth or ninth aspect of the invention.

According to an eleventh aspect of the invention there is provided a data carrier having instructions thereon, which, when executed by a processor of an additive manufacturing apparatus according to the eighth aspect of the invention, causes the processor to control the scanner to carry out the method of the seventh, eighth or ninth aspect of the invention.

According to a twelfth aspect of the invention there is provided an additive manufacturing method comprising forming layers of the material bed and exposing the layers to at least one energy beam to consolidate material to form an object. The method may comprise exposing each layer at a plurality of locations to consolidate a voxel of unconsolidated material throughout a thickness of two or more of the layers, wherein the voxels are arranged such that different ones of the voxels encompassing the same layer start and/or end on a different layer.

According to a thirteenth aspect of the invention there is provided an additive manufacturing apparatus comprising a support for supporting a material bed, a layer formation device for forming layers of material of the powder bed, a scanner for scanning at least one energy beam over the layers and a processor for controlling the scanner. The processor may be arranged to control the scanner to carry out the method of the twelfth aspect of the invention.

According to a fourteenth aspect of the invention there is provided a data carrier having instructions thereon, which, when executed by a processor of an additive manufacturing apparatus according to the eleventh aspect of the invention, causes the processor to control the scanner to carry out the method of the twelfth aspect of the invention.

The data carrier of the above aspects of the invention may be a suitable medium for providing a machine with instructions such as non-transient data carrier, for example a floppy disk, a CD ROM, a DVD ROM / RAM (including - R/-RW and +R/ + RW), an HD DVD, a Blu Ray(TM) disc, a memory (such as a Memory Stick(TM), an SD card, a compact flash card, or the like), a disc drive (such as a hard disc drive), a tape, any magneto/optical storage, or a transient data carrier, such as a signal on a wire or fibre optic or a wireless signal, for example a signals sent over a wired or wireless network (such as an Internet download, an FTP transfer, or the like).

### Description of the Drawings

**Figure 1** is a schematic of a selective laser solidification apparatus according to an embodiment of the invention;
**Figure 2** is a schematic of the selective laser solidification apparatus from another side;
**Figure 3** is a schematic illustration of melt pools formed by an irradiation strategy in accordance with an embodiment of the invention;
**Figure 4** illustrates the shrinkage of consolidated material and the powder coverage during the spreading of subsequent layers;
**Figure 5** is an overlay of exposure points exposed in three consecutive layers in accordance with an embodiment of the invention;
**Figures 6a** **and** **6c** show the exposure points of Figure 5 separated out into the individual layers;
**Figure 7** is an overlay of exposure points exposed for three consecutive layers for a transition from a core region of the object to a shell/border of the object;
**Figures 8a to 8c** show the exposure points of Figure 7 separated out into the individual layers;
**Figure 9** illustrates a method of off-setting a pattern of exposure points between different sets of layers;
**Figure 10** illustrates a blending of the pattern of exposure points of a core with border exposure points;
**Figure 11** shows an exposure point distribution for a layer as determined with an algorithm that uses constrained Delaunay triangulation to minimise overlap and maximise coverage of the melt pools created by irradiating the laser beam at the identified points;
**Figures 12a and 12b** illustrate an adjustment of the exposure point locations in accordance with a multi-layer packing algorithm based upon laser power and melt pool depth;
**Figure 13** shows a "T-Block" irradiation strategy according to an embodiment of the invention; and
**Figure 14** is a schematic illustrating a scanning strategy according to another embodiment of the invention.

### Description of Embodiments

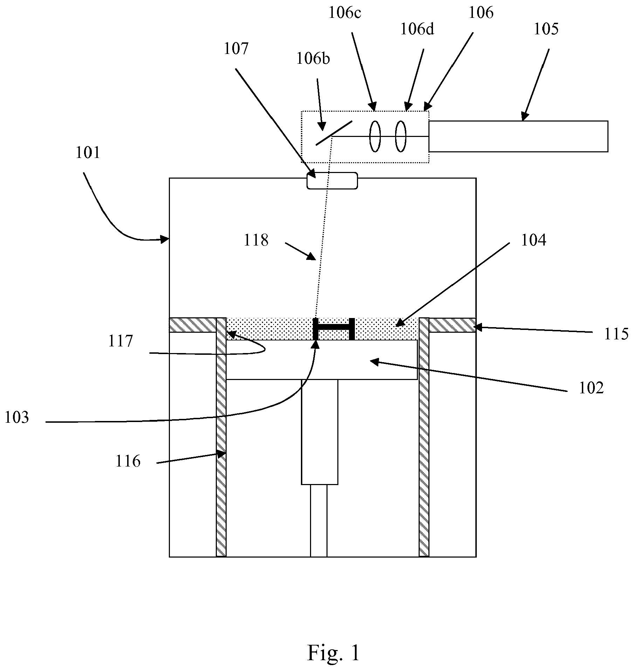

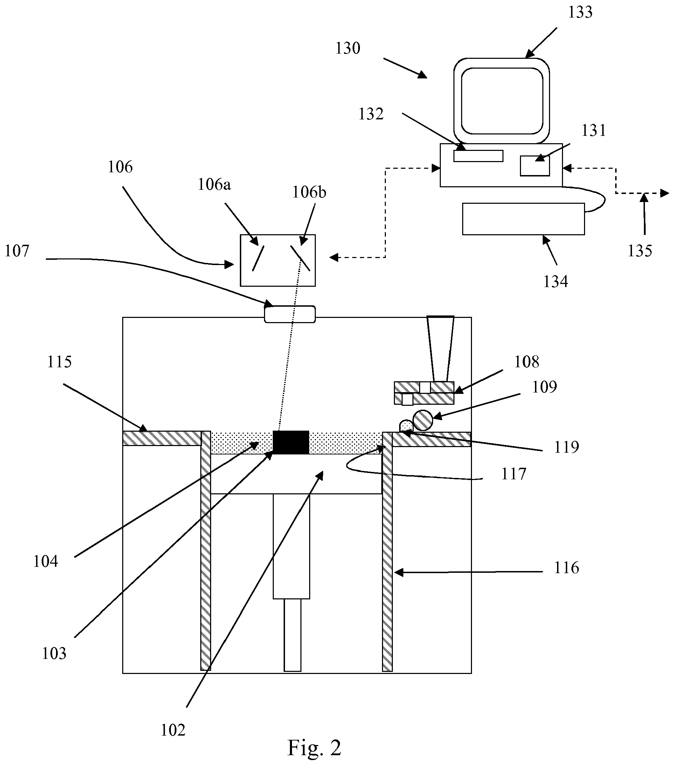

Referring to Figures 1 and 2, a laser solidification apparatus according to an embodiment of the invention comprises a sealable build chamber 101 having therein partitions 115, 116 that define a build sleeve 117 and a surface onto which powder can be deposited. A build platform 102 is provided for supporting an object 103 built by selective laser melting powder 104. The platform 102 can be lowered within the build sleeve 117 as successive layers of the object 103 are formed. A build volume available is defined by the extent to which the build platform 102 can be lowered into the build sleeve 117.

Layers of powder 104 are formed as the object 103 is built by dispensing apparatus 108 and an elongate wiper 109. For example, the dispensing apparatus 108 may be apparatus as described in WO2010/007396. The wiper 109 pushes dosed powder 119 across the powder bed 104 to form a layer of powder.

A laser module 105 generates a laser for melting the powder 104, the laser directed as required by optical scanner 106 under the control of a computer 130. The laser beam 118 enters the chamber 101 via a window 107.

The optical scanner 106 comprises steering optics, in this embodiment, two movable mirrors 106a, 106b for directing the laser beam to the desired location on the powder bed 104 and focussing optics, in this embodiment a pair of movable lenses 106c, 106d, for adjusting a focal length of the laser beam. Motors (not shown) drive movement of the mirrors 106a and lenses 106b, 106c, the motors controlled by processor 131.

Computer 130 comprises the processor unit 131, memory 132, display 133, user input device 134, such as a keyboard, touch screen, etc., a data connection to modules of the laser melting unit, such as optical module 106 and laser module 105 and an external data connection 135. Stored on memory 132 is a computer program that instructs the processing unit to carry out the method as now described.

Processor receives via external connection 135 a build file comprising instructions for a build of an object. To build the object, the processor 131 controls the scanner 106 to direct the laser beam 118 in accordance with the instructions.

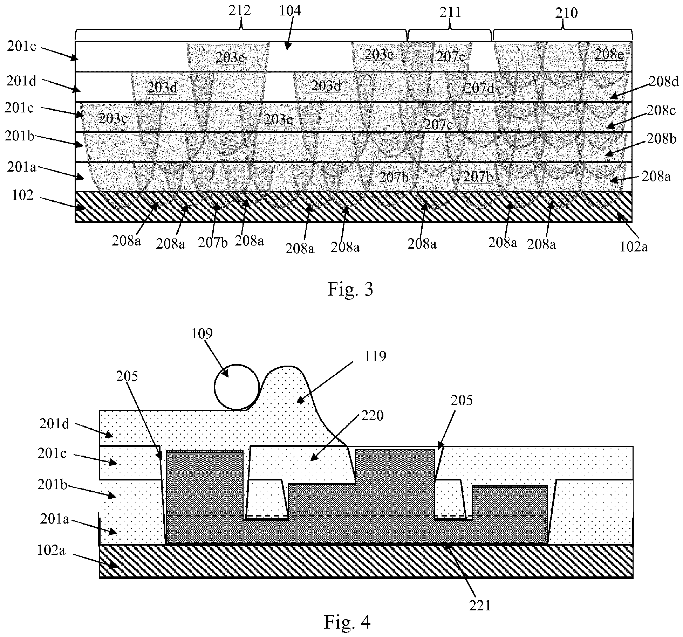

Referring to Figures 3 to 8c, in a first embodiment, to melt and solidify selected areas of the powder bed to form the object, each layer 201a to 201e is exposed to the laser beam 118 (or in a multi-laser apparatus, at least one of the laser beams). The object is typically formed on a build substrate plate 102a. In this embodiment, discrete points 204c, 204d, 204e on each layer 201a to 201e are exposed to the/one of the laser beams to form melt pools 203c to 203e. The laser beam parameters are selected such that, for at least one of the layers 201a to 201e, regions of the layer to be consolidated to form a solidified mass 221 (i.e. block or island) within the layer are consolidated together with corresponding regions of at least one of the other layers 201a to 201e throughout a thickness of the and the at least one other layer 201a to 201e. Different ones of the regions are consolidated together with different other layers 201a to 201e. For example, in Figure 3, regions within layer 201c are consolidated together through the formation of melt pools 203c to 203e, 207c, 207d and 208c, melt pools 203c consolidating material in layers 201a to 201c, melt pools 203d consolidating material in layers 201b to 201d and melt pools 203e consolidating material in layers 201c to 201e. Other exposures form melt pools 207b to 207e and 208a to 208e for consolidating fewer than three layers to solidify all required areas of the powder bed 104 and/or border regions, as described in more detail below.

Figure 4, illustrates a portion of the object 203 built after exposure of points on layer 201c to the laser beam. Discrete regions (islands surrounded by powder) have been consolidated with powder in gaps 220 therebetween. During consolidation of the powder, the melt pool gathers powder from the surrounding area due to fluid forces in the melt pool. After consolidation, a volume occupied by the solidified material is less than a volume occupied by the powder before consolidation. It is believed that these processes leaves gaps 205 around and above the consolidated material. Spreading of a subsequent powder layer fills the gaps with powder. Figure 4 schematically illustrates how each layer of powder fills gaps formed by consolidation of material through exposure of the previous layer.

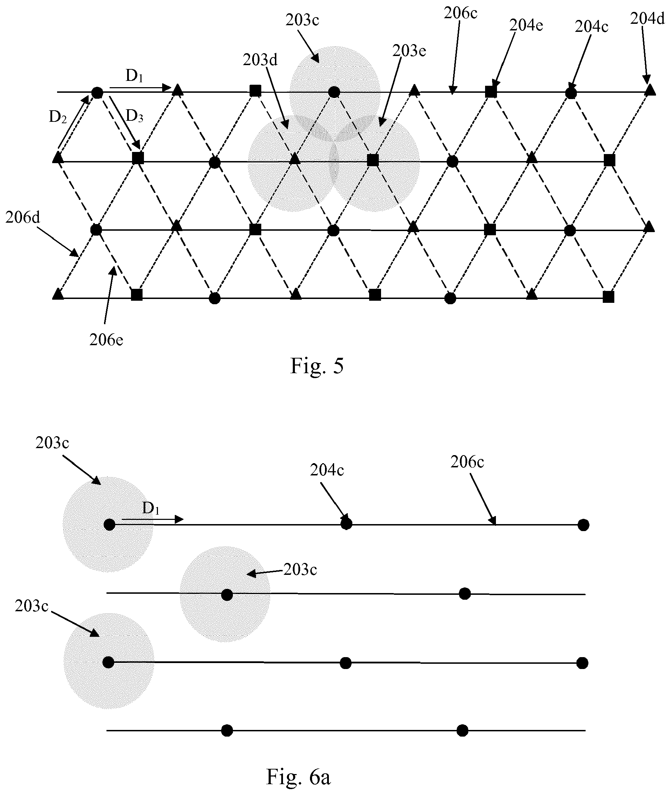

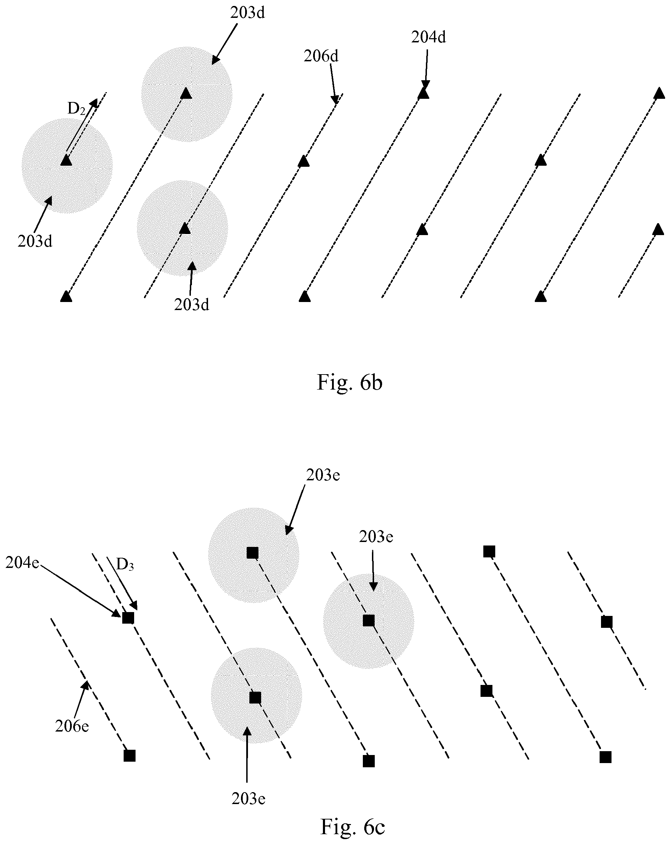

Referring to Figures 5 and 6a to 6c, a scan strategy for forming a core of the object comprises exposing points 204c, 204d, 204e along hatch/scan lines 206c, 206d, 206e. The circles represent points 204c exposed on layer 201c through modulation of the laser as the scanner moves the steering mirrors to track along parallel hatch lines 206c, the triangles represent points 204d exposed on layer 201d through modulation of the laser as the scanner moves the steering mirrors to track along parallel hatch lines 206d and the squares represent points 204e exposed on layer 201e through modulation of the laser as the scanner moves the steering mirrors to track along parallel hatch lines 206e. As can be seen from Figure 5, the hatch lines 206c, 206d, 206e of each layer 201c, 201d, 201e extend in a different direction to the hatch lines 206c, 206d, 206e of the previous layer 201c, 201d, 201e. In this embodiment, the hatch lines 206c, 206d, 206e of each layer 201c, 201d, 201e are at an angle of 60 degrees relative to the hatch lines 206c, 206d, 206e of the other layers 201c, 201d, 201e. The points are arranged at locations along the hatch lines 206c, 206d, 206e such that a fully consolidated region is formed across each layer throughout the core. However, as can be seen from Figures 6a to 6c, the regions of each layer 201c, 201d, 201e consolidated through direct exposure of that layer 201c, 201d, 201e to the laser beam (i.e. before the layer 201c, 201d, 201e is covered by the next layer 201d, 201e) are discrete (i.e. separate islands of consolidated material) from the other regions in the layer 201c, 201d, 201e that are consolidated before the next layer 201d, 201e is formed. In this way, each of these regions can contract individually as it cools. These regions are subsequently joined together when powder between these regions is consolidated through direct exposures of one or more subsequent layers 201d, 201e. These gaps 220 between consolidated regions can also be seen in Figures 3 and 4, wherein melt pools 203c form consolidated regions with powder 104 therebetween, which is subsequently consolidated through the formation of melt pools 203d and 203e through direct exposure of layers 201d and 201e to the laser beam.

The points on the hatch lines 206c, 206d, 206e may be exposed in an order based upon a gas flow direction, for example the points may be exposed in a sequence such that the laser beam is advanced in a direction D₁, D₂ and D₃ against the gas flow direction.

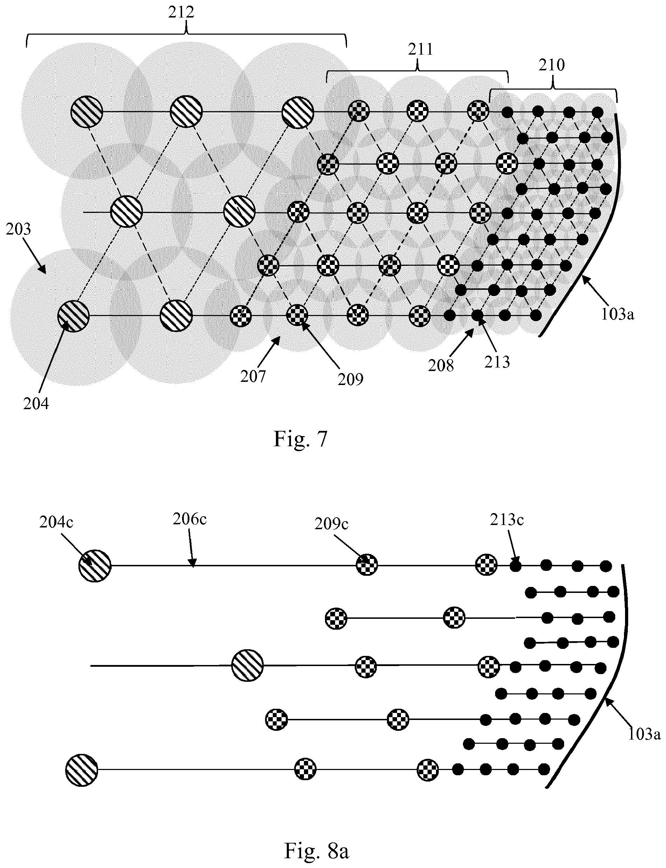

Referring to Figure 7, in a transition region (so called "shell") between the core 212 and a surface 103a of the object 103 a distance between exposure points 204, 209, 213 is reduced together with a corresponding reduction in laser power and laser spot size as the exposures approach the surface 103a of the object 103. In this embodiment, the shell of each layer 201a to 201e is split into an outer border section 210 adjacent to the surface 103a and an inner border section 211 spaced from the surface 103a by the outer border section 210. The entire outer border section 210 of each layer 201a to 201e is consolidated before the next layer is formed by direct exposure of that layer 201a to 201e the laser beam. For this a small point distance and spot size is used. The inner border section 211 of each layer 201a to 201e is consolidated through a combination of direct exposures of the layer 201a to 201e and direct exposure of the next layer 201b to 201e. The point exposures 209 of the inner border section 211 are carried out using a larger point distance and a larger spot size than that used for the outer border section 210 but a smaller point distance and a smaller spot size than that used for the core 212 of the object 103.

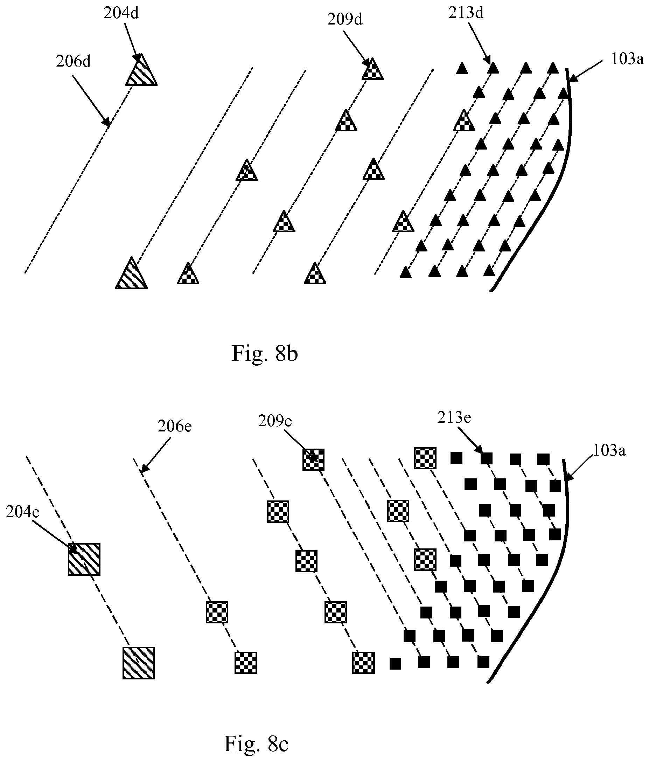

The different spot sizes and point distances are illustrated in Figure 7. The circles in Figure 7 represent a combined set of exposure points 204, 209, 213 for three consecutive layers. Figures 8a to 8c illustrate a distribution of point exposures across three consecutive layers, with the circles 204c, 209c, 213c illustrating points exposed on a first layer 201c, the triangles 204d, 209d, 213d points exposed on a second layer 201d and the squares points 204e, 209e, 213e exposed on a third layer 201e. As can be seen, points 213 in the outer border section 210 are exposed every layer, points 209 in the inner border section 211 are exposed every two layers and points 204 in the core 212 exposed every three layers. A possible overlap, depth and offset of the melt pools 203, 207, 208 can be seen in Figure 3.

In one embodiment, a layer thickness of the unconsolidated powder is 20 to 50 microns and preferably 30microns. Exposure of points 213 may consolidate powder having a single layer thickness, e.g. 30microns, exposure of points 209 consolidate powder having twice the layer thickness, e.g. 60microns, and exposure of points 204 consolidate powder having three times the layer thickness, e.g. 90 microns. It will be understood that in other embodiments, each exposure may consolidate powder having other multiples of the layer thickness. Furthermore, a transition from the object surface to the core may comprise more or less than three different sets of exposures (i.e. each set comprising exposures having the same parameters. i.e. spot size, laser power, point distance, exposure time, etc.).

An advantage of the embodiment shown in Figures 3 to 8, is that the laser beam may be advanced along the hatch lines in the required manner using tiltable mirrors driven by conventional galvanometers. The effective scan speed is increased (by a factor of three for the core 212) compared to conventional hatch scanning strategies in which the entire core is consolidated through direct exposure of a single layer. Thus, heating of the optics is spread out over a larger area of the optics, potentially reducing thermal effects of the laser beam on the optics.

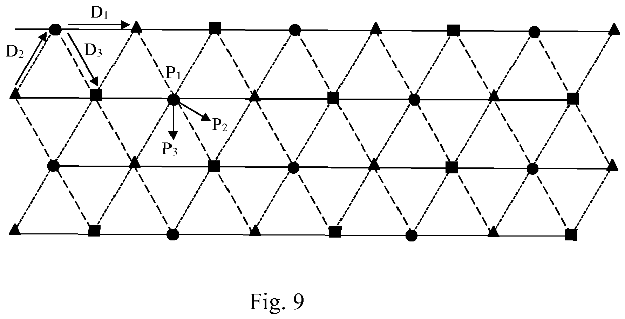

Referring to Figure 9, an object may be built wherein a first set of layers are built using a first set of exposure points, using the scan strategy as described above, and a second set of layers are built using a second set of exposure points that are in the same hexagonal lattice pattern of the first set of the exposure points but off-set from the first set of exposure points. In this embodiment, three possible positions are provided for the hexagonal lattice of exposure points as indicated by P₁, P₂ and P₃, effectively a translation of the lattice in a direction perpendicularly to the scan directions D₁, D₂ and D₃. By shifting the pattern of exposure points after a predetermined number of layers, a more isotropic object may be built.

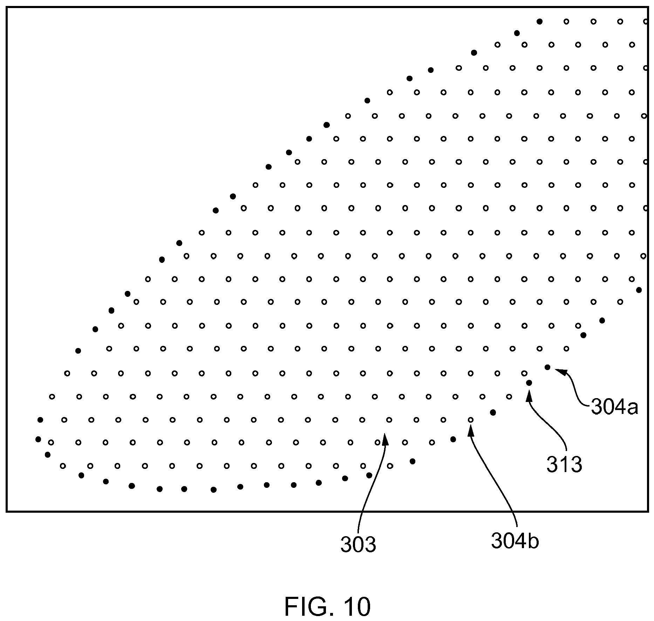

In an alternative embodiment for completing the perimeter of the object is shown in Figure 10. Rather than graduating to a finer mesh of perimeter points, as described above, or carrying out border scans to form a complete shell around a core, as is conventional, in this embodiment, the pattern of core exposure points 304 (shown by the small, dark squares) is extended to a perimeter of the object such that parts of the perimeter 303 of the object are formed using points 304b of the core scan strategy. A border scan is then carried out to fill in the gaps along the perimeter 303 with border exposure points 313 (shown in larger, lighter squares). It is believed that this "blending" of the border exposure points with the core may result in beneficial properties of the resultant object, such as a reduction in cracks.

In yet another embodiment, the points 304b of the core scan strategy that are located along the border are not completed as part of the core scan but are cannibalised with the border exposure points 313 to form a complete border scan all around the part.

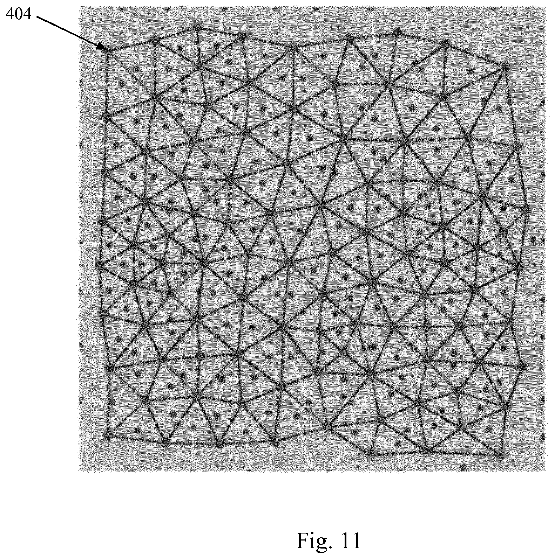

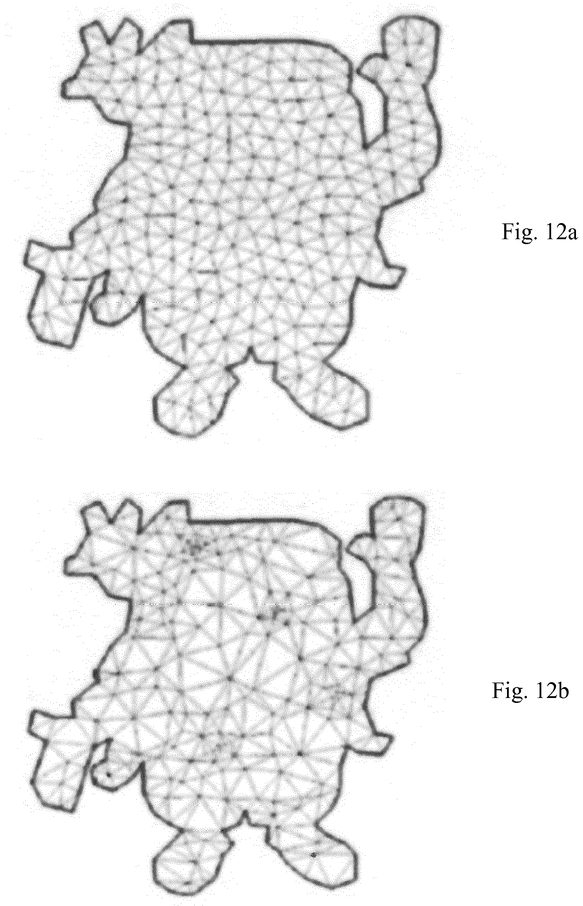

A further embodiment of the invention will now be described with reference to Figures 11, 12a and 12b. This embodiment does not use a fixed-point spacing between exposure points of the same set but determines a point spacing of neighbouring exposure points based upon a melt pool width (which is linked to the laser power) generated at that point in the layer (which may be achieved through direct exposure of that layer or through exposure of a later laid layer).

To determine exposure points for each layer, a three-dimensional model of the object to be built is sliced into cross-sections corresponding to layers of powder spread using the wiper 109. Border lines and hatch lines for a core within the border lines are then determined in a conventional manner for each cross-section. Exposure points along these border and hatch lines are then determined based upon point distances defined for the hatch and border lines.

A geometric triangulation of each cross-section is carried out based upon the exposure points on the border line to sub-divide the cross-section into triangles. A determination is then made whether any points on the hatch lines fall within the triangles and further triangles are generated within the original triangles until no points fall within a triangle. Delaunay triangulation may be used to determine these triangles. Sliver triangles may be avoided though use of an edge flipping technique, where appropriate.

A weighting is then assigned to each point based upon a laser power that the point is subjected to and the locations of k nearest neighbouring points adjusted based upon the weighting applied to the point. The width of the melt pool generated at an exposure point with a specified power for a particular material is determined experimentally. Those points that are subjected to a higher laser power are given a higher weighting to repel neighbouring points more than points that are subjected to a lower laser power (and thus allocated a lower weighting). The determination of a weighting for each point may be carried out using a weighted moving average technique. This may result in a distribution of points 204 as shown in Figure 11 (which is a Voronoi diagram also showing connected centres of the circumcircles).

A quad tree of the points of a layer is then created to form adaptable cells for the decomposition of the cross-section into exposure points.

The locations of the points are then compared to the locations of points in X number of layers, such as 4 layers, below the layer being considered. If the locations of points in these layers are sufficiently close, e.g. within a predefined threshold, such that the powder coinciding with these points can be consolidated together using a single exposure, then the positions of these identified points are adjusted and locked to a centre of exposure used to solidify powder at these points to form a "column" of points extending through the layers. A weighting applied to the identified points is adjusted based upon a layer depth of the point relative to the surface that is exposed to the laser beam to consolidate powder at that point.

The above process of adjusting the locations of the points based upon weightings given to the points is then carried out but for the new weightings applied to the identified points. Further columns of points are then identified and locked to a location of a single exposure. This process is repeated until a measure of changes in point locations of the layer for each iteration falls below a threshold level. For each column, an exposure point is identified on a layer that is directly exposed to the laser beam to consolidate material of the column and a required laser power.

The top layer of the X number of layers is then removed from consideration and the next layer down, below the X number of layers already considered, added. The process as described above is then repeated but without adjusting the positions of points that have already been locked into a column with other points. This process is repeated until the locations of all points have been considered and adjusted, where appropriate. An exposure strategy determined in this way results in regions of each layer being consolidated together with corresponding regions of at least one of the other layers throughout a thickness of the and the at least one other layer and different regions within the layer being consolidated together with different other layers.

Figures 12a and 12b illustrate how locations of points in a layer may be adjusted from locations determined using the weighted moving average technique to locations determined based upon forming columns of points across X number of layers to be consolidated together using a single exposure.

There may be some points that may be locked together in columns that comprise less than 5 layers or even only a single layer. Powder at these points may be consolidated using a point exposure having a different laser power than a point exposure used to consolidate powder though 5 layers. Accordingly, it may be necessary to adjust the laser power when exposing different exposure points on a layer. To minimise a time for completing the exposures, both a distance between exposure points and a laser power should be taken into account when determining a sequence in which to complete the exposures. To change laser power takes time and accordingly, there is a time cost for the laser to be moved between exposure points that require different powers. Accordingly, in a preferred embodiment, a cost minimisation algorithm is used for determining a sequence in which exposure points are exposed to the laser beam wherein a cost is allocated based upon a distance between the exposure points and changes in laser power.

The algorithm may first determine a single path between all the exposure points of a layer, for example based upon conventional raster scanning techniques. A time cost for each move between exposure points is determined and the single path is split into smaller strings if a cost of a move is above a pre-set threshold. A cost minimisation algorithm is then used to determine how the separated strings should be re-joined together to minimise the time cost for completing the sequence of exposures.

Due to the meandering nature of the resultant scan path, a scanner may be used having a steering mirror with a faster dynamic response that a conventional steering mirror driven by galvanometer. For example, a scanner with a piezo activated mirror, as described in WO2016/156824, may be used.

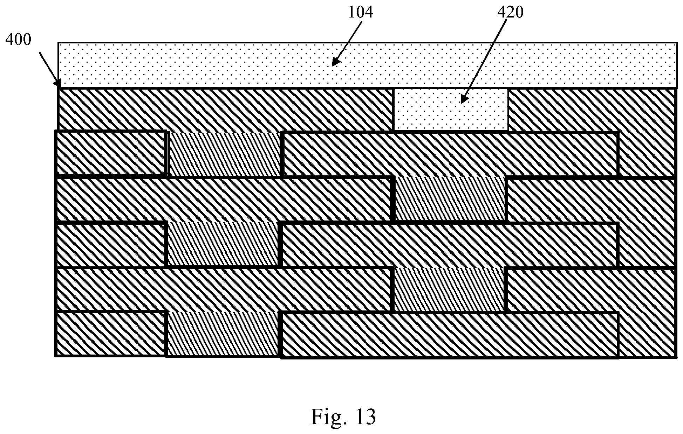

Referring to Figure 13, according to a further embodiment, T-shaped or L-shaped blocks of powder may be consolidated during exposure of a layer to the laser beam the resultant consolidated regions 400 separated by gaps 420 of powder that are later consolidated through exposure of next layer. Such a scanning strategy may help to minimise vertical as well as horizontal lines of weakness.

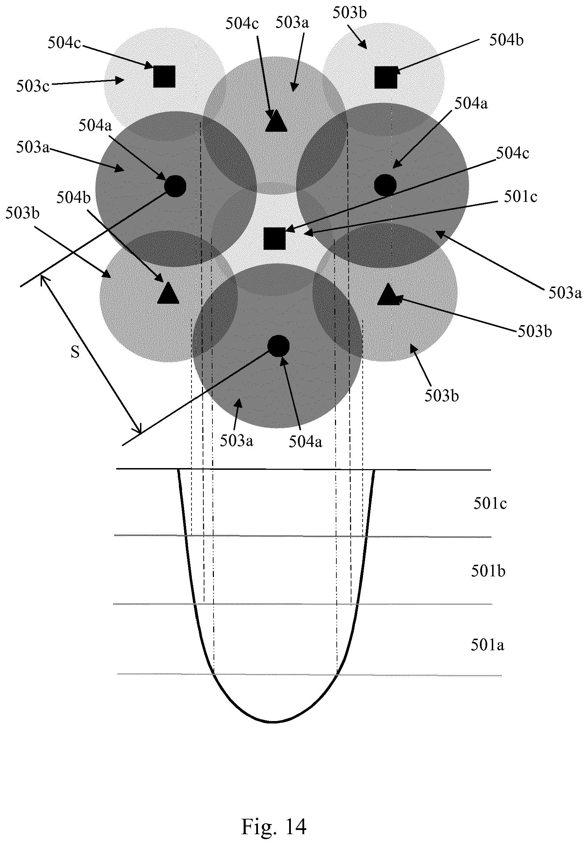

A further embodiment of the invention is shown in Figure 14. In this embodiment, point exposures 504a, 504b, 504c for each layer 501a, 501b, 501c are distributed in a regular pattern, in this embodiment a hexagonal tiling, wherein the exposure points 504a, 504b, 504c of the pattern are sufficiently spaced apart so that the melt pools/solidified material 503a, 503b, 503c formed by the point exposures 504a, 504b, 504c that layer 501a, 501b, 501c do not overlap. A spacing, S, between the exposure points 504a, 504b, 504c for each layer 501a, 501b, 501c is the same for every layer 501a, 501b, 501c but the hexagonal tiling of exposure points is offset between layers 501a, 501b, 501c such that, solidification of a layer 501a, is completed through the exposure of that layer 501a and the next two layers 501b and 501c. The selected spacing, S, is based upon expected diameters/widths of melt pools formed in the layer formed through the exposures 504a, 504b, 504c of the different layers 501a, 501b, 501c, which itself is determined from an expected shape of the melt pool, as shown in Figure 14.

It is expected that the effect of melting regions 503a located that close together in a layer 501a will result in the at least a proportion of the powder between these melted regions being sintered (but not melted). This may be beneficial when the sintered regions are later melted through exposure of a subsequent layer 501b, 501c as it may result in less powder being ejected from the melt pool and therefore, a reduced amount of gas-borne vapour and particles. This can be beneficial to the process as a reduction in gas-borne particles and vapour will reduce adverse effects on the propagation of the laser beam(s) to the powder bed surface. In such an embodiment, the consolidated state of the material is the solidified material after melting whereas the unconsolidated state comprises both an initial state of the material, e.g. unsintered and unmelted powder, and an intermediate state, e.g. sintered powder before subsequent melting.

The point exposures 504a, 504b, 504c of each layer 501a, 501b, 501c may be processed by raster scanning the laser beam along hatch lines, as described above with reference to Figures 5 and 6a to 6c, wherein the hatch lines of each layer extend in a different direction to the previous layer.

Rather than melt pools with circular cross-sections within the plane of layer, the melt pools may have an elliptical shape with a longitudinal axis in the direction of movement of the laser beam along the hatch line. The pattern of exposure points (or lines as they may now be) may be adjusted accordingly. Such an embodiment may be preferably as it takes into account the dynamic capabilities of the optical module. In particular, to obtain a circular melt pool, the apparatus may have to wait until a mirror has settled before firing the laser. However, to reduce the build time, the settling time for the mirrors may be reduced allowing for some movement of the mirrors during firing of the laser. This may result in melt pools with an elliptical shape.

It will be understood that modifications and alterations may be made to the above described embodiments without departing from the invention as defined herein. For example, in another embodiment, different multiples of layer thicknesses may be consolidated through each exposure. Multiple laser beams or other energy beams may be used to consolidate powder material. The material that is consolidated may by a resin curable through exposure to an energy beam (as is the case in stereolithography) rather than a powder. The scanner may comprise a gantry system instead of or in addition to tiltable mirrors. Each discrete consolidated region may have a size of less than 10 spot diameters. Alternatively, each discrete consolidated region may be at least an order of magnitude bigger than a spot size of the energy beam. For example, each region may be formed by a continuous movement of the spot of the energy beam over the surface. Each consolidated region may have a size of less than 1 mm.

## Claims

1. An additive manufacturing method comprising forming layers of unconsolidated material to form a material bed and exposing the layers to at least one energy beam to consolidate material to form an object, wherein a plurality of regions of a layer are consolidated to form together a consolidated section within the layer and unconsolidated material of each region is consolidated together with unconsolidated material of at least one other layer with different ones of the regions being consolidated together with different other layers.

2. An additive manufacturing method according to claim 1, wherein first ones of the regions are consolidated through direct exposure of the layer to the at least one energy beam whilst other ones of the regions are consolidated through direct exposure of a successive one of the other layers to the at least one energy beam.

3. An additive manufacturing method according to claim 1 or claim 2, wherein, for layers corresponding to a middle cross-section of the object, one or more of the regions of the layer are consolidated by direct exposure of a successive layer.

4. An additive manufacturing apparatus according to any one of claims 1 to 3, wherein first ones of the regions are consolidated to form discrete regions having unconsolidated material of the layer therebetween before consolidation of the other ones of the regions join the first ones of the regions in the layer.

5. An additive manufacturing method according to any one of the preceding claims, comprising advancing a spot of the at least one energy beam over the layers along parallel tracks with the at least one energy beam being modulated to consolidate separated regions of material along the tracks and, wherein the spot may be advanced along tracks over at least three successive layers, the tracks for each of the three successive layers extending in different directions, wherein the tracks for each of the three successive layers may be straight tracks and extend at an angle of 60 degrees relative to the tracks of the other successive layers, and wherein the at least one energy beam may be modulated as the at least one energy beam is advanced along each track to consolidate unconsolidated regions of a previous layer between already consolidated regions in the previous layer and wherein, as the at least one energy beam is moved along each track, the at least one energy beam may be modulated to consolidate regions of unconsolidated material extending across at least three layers.

6. An additive manufacturing method according to any one of the preceding claims, wherein the regions are consolidated to form a core of the object.

7. An additive manufacturing method according to any one of the preceding claims, comprising forming a perimeter of the object within a layer, at least in part, by regions of the layer that are consolidated together with unconsolidated material of at least one other layer and carrying out a border scan comprising consolidating unconsolidated material at the perimeter between the regions at the perimeter.

8. An additive manufacturing method according to any one of the preceding claims, wherein different ones of the regions are consolidated together with a different number of the other layers and may further comprise exposing each layer to a plurality of energy beams to consolidate material to form the object, a first one of the energy beams operating at a first power density to consolidate regions of unconsolidated material extending across a first number of layers and a second one of the energy beams operating at a second power density to consolidate regions of unconsolidated material extending across a second number of layers different to the first number.

9. An additive manufacturing apparatus comprising a support for supporting a material bed, a layer formation device for forming a plurality of layers of material on the support to form a material bed, a scanner for steering at least one energy beam over each layer of the plurality of layers and a processor for controlling the scanner, the processor arranged to control the scanner to carry out the method of any one of claims 1 to 8.

10. A data carrier having instructions thereon, which, when executed by a processor of an additive manufacturing apparatus according to claim 14, causes the processor to control the scanner to carry out the method of any one of claims 1 to 8.

11. A method of planning an additive manufacturing build in which successive layers of material are formed to form a material bed and the layers are exposed to at least one energy beam to consolidate material to form an object, the method comprising receiving a three-dimensional model of an object to be built, determining cross-sections of the object corresponding to the layers of material of the material bed, determining, for at least one of the layers based upon the cross-sections, regions of the layer to be consolidated to form together a consolidated section within the layer, wherein unconsolidated material of each region is consolidated together with unconsolidated material of at least one other layer of the successive layers and different ones of the regions are selected to be consolidated together with different other layers. and generating instructions to be executed by an additive manufacturing apparatus based upon the determination.

12. A method according to claim 11, comprising generating a build file on a data carrier, the build file comprising the instructions.

13. An additive manufacturing method in which an object is formed by selectively consolidating material of a material bed with at least one energy beam, the method comprising forming a first layer of the material bed and exposing the first layer to the at least one energy beam to consolidate unconsolidated material of the first layer and at least one preceding layer throughout the layer thickness of each of the first and the preceding layers to form discrete first consolidated regions in the first layer, the first regions having unconsolidated material of the first layer therebetween, forming one or more further layers of the material bed over the first layer and exposing the or each of the further layers to the at least one energy beam to consolidate unconsolidated material throughout the layer thickness of each of the first and the further layers such that unconsolidated material of the first layer is consolidated to join the first regions.

14. An additive manufacturing apparatus comprising a support for supporting a material bed, a layer formation device for forming layers of material of the powder bed, a scanner for scanning at least one energy beam over each layer and a processor for controlling the scanner, the processor arranged to control the scanner to carry out the method of claim 13.

15. A data carrier having instructions thereon, which, when executed by a processor of an additive manufacturing apparatus according to claim 14, causes the processor to control the scanner carry out the method of claim 13.
